# EUROPEAN PATENT APPLICATION

(11) **EP 4 635 732 A1**
(43) Date of publication of application: **22.10.2025**
(21) Application number: 25170056.3
(22) Date of filing: 11.04.2025
(51) Int. Cl.: B32B 7/12, B32B 27/08, B32B 27/10, B32B 27/32, B32B 29/06

(54) **RECYCLABLE LAMINATED PACKAGING MATERIAL, PACKAGING CONTAINER COMPRISING THE LAMINATED PACKAGING MATERIAL, AND METHODS OF MAKING AND RECYCLING THE MATERIAL AND CONTAINER**

(30) Priority: 19.04.2024 EP 24171381
(71) Applicant: Tetra Laval Holdings & Finance S.A., 1009 Pully (CH)
(72) Inventor: MÖLLER, Anna, 221 86 Lund (SE); LJUNG, Anders, 221 86 Lund (SE)
(74) Representative: Tetra Pak Patent Attorneys

(57) **Abstract**

A laminated packaging material (10) for packaging of liquid or semi-liquid food products comprises as layers of a layer sequence:
- an outermost protective material layer (16);
- a bulk layer (11) of paper or paperboard or other cellulose-based material;
- an intermediate bonding layer (13) of polyethylene-based thermoplastic polymer applied via melt extrusion lamination in an amount of 5 to 10 g/m²;
- a gas barrier layer (14) bonded to the bulk layer (11) via the intermediate bonding layer (13), the gas barrier layer (14) comprising a barrier substrate (14a) of paper or paperboard or other cellulose-based material and at least one barrier material coating layer (14b, 14c), the paper barrier substrate (14a) being adjacent to the intermediate bonding layer (13); and
- one or more inside polymer layers (18, 19a, 19b), comprising an innermost liquid-tight, heat sealable material layer (19b).

A container comprising the laminated packaging material and methods of making and recycling the material and container are also disclosed.

## Description

### Technical field

The present invention relates to a recyclable laminated packaging material (also referred to herein as a "packaging laminate") comprising a gas barrier layer, in particular intended for liquid carton food packaging, to a method of making such a laminated packaging material, to a packaging container comprising the laminated packaging material, to a method of making such a packaging container and to a method of recycling the laminated packaging material or container.

### Background of the invention

Packaging containers of the single use disposable type for liquid foods are often produced from a packaging laminate based on paperboard or carton. One such commonly occurring packaging container is marketed under the trademark Tetra Brik Aseptic^{®} and is principally employed for aseptic packaging of liquid foods such as milk, fruit juices etc, sold for long term ambient storage. The packaging material in this known packaging container is typically a laminate comprising a bulk or core layer, of paper, paperboard or other cellulose-based material, and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional layer, most commonly an aluminium (Al) foil.

On the inside of the laminate, i.e. the side intended to face the filled food contents of a container produced from the laminate, there is an innermost layer, applied onto the aluminium foil, which innermost, inside layer may be composed of one or several part layers, comprising heat sealable thermoplastic polymers, such as adhesive polymers and/or polyolefins. Also on the outside of the bulk layer, there is an outermost heat sealable polymer layer. As mentioned above, these layers are also liquid-tight.

The packaging containers are generally produced by means of modern, high-speed packaging machines of the type that form, fill and seal packages from a web or from prefabricated blanks of packaging material. Packaging containers may thus be produced by reforming a web of the laminated packaging material into a tube by both of the longitudinal edges of the web being united to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally cuboid shape, by fold formation along prepared crease lines in the packaging material.

The main advantage of this continuous tube-forming, filling and sealing packaging method concept is that the web may be sterilised continuously just before tube-forming, thus providing for the possibility of an aseptic packaging method, i.e. a method wherein the liquid content to be filled as well as the packaging material itself are reduced in bacteria and the filled packaging container is produced under clean conditions such that the filled package may be stored for a long time even at ambient temperature, without the risk of growth of micro-organisms in the filled product. Another important advantage of the Tetra Brik^{®}-type packaging method is, as stated above, the possibility of continuous high-speed packaging, which has considerable impact on cost efficiency.

Packaging containers for sensitive liquid food, for example milk or juice, can also be produced from sheet-like blanks or prefabricated blanks of the laminated packaging material of the invention. From a tubular blank of the packaging laminate that is folded flat, packages are produced by first of all building the blank up to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package. There are also packages of this type which have a moulded top and/or screw cap made of plastic.

A packaging laminate of the above-described type is conventionally produced by a process in which a web of paper or paperboard is united with a prefabricated web of aluminium which, with good adhesive strength, is bonded to the paper or paperboard web, with the aid of a thermoplastic bonding layer which is extruded between the webs. The webs are thereafter coated with thin layers of polyethylene which are extruded on both sides of the webs for the formation of the outer, liquid-tight plastic layers of the packaging laminate.

By such means, the packaging laminate can be given good integrity and internal adhesive or bonding strength, which is a vital precondition to be able to produce a mechanically strong and configurationally stable package from the packaging laminate.

In recent years, the majority of the producers of food packaging containers are focusing on reaching recyclability and sustainability standards promoted by various governments and other institutions, such as the European Union. The objective of these efforts is to deliver a future carton-based packaging container, made to a larger extent of renewable packaging materials, and being to a higher degree recyclable, in order to reduce waste and pollution.

One aspect of sustainability is to provide alternatives to aluminium foil as a barrier layer. A layer of an aluminium foil in the packaging laminate provides gas barrier properties quite superior to most other gas barrier materials. The conventional aluminium foil based packaging laminate for liquid food aseptic packaging is still the most cost-efficient packaging material, at its level of performance, available on the market today. However, there is a need to provide alternative barrier materials to aluminium foil to reduce the carbon footprint further. Aluminium foil barriers for liquid carton food packaging are normally from 5 to 9 µm in thickness, such as most commonly about 6 µm.

Any other material to compete with the foil-based materials should be cost-efficient regarding raw materials, have comparable food preserving properties, a reduced carbon footprint and have a comparably low complexity in the converting of materials into a finished packaging laminate.

Among the efforts of developing non-aluminium-foil materials for liquid food carton packaging, there is a general incentive towards developing pre-manufactured films or sheets having high barrier properties, or towards combining several separate barrier materials in a multilayer film or sheet. Such films or sheets would replace the aluminium-foil barrier material in the conventional laminated packaging material and may further be adapted to conventional processes for lamination and manufacturing of laminated packaging materials.

In line with increased requirements to use only sustainable materials, polymeric barrier materials originating from fossil sources have become less interesting, and thus it remains to work with the types of thin barrier coatings which would be almost negligible in recycling processes and cause very little problems in an economy based on circulation of materials and renewable (non-fossil) materials, i.e. aqueous dispersion coatings and vapour deposition coatings. Such coatings are applied on substrates which do not typically provide significant barrier properties themselves e.g. polyolefin, polyester or paper. The thickness of a dispersion-coated polymer is around 0.5 to 4 µm, while vapour-deposited barrier coatings are as thin as below 0.5 µm, such as from 5 to 200 nm, from 10 to 100 nm, from 15 to 80 nm, or from 20 to 50 nm. Various such coatings have been developed for many years and have been combined in multilayer packaging material structures in search for an improved total performance. Typical materials for vapour-deposited barrier coatings are aluminium, aluminium oxide and silicon oxide. Such gas barrier layers are discussed for example in WO2013/041469 and WO2023/186448 of the applicant.

A second aspect of sustainability is recyclability. While good integrity and internal adhesive or bonding strength of the packaging laminate are both desirable and necessary to be able to produce packages possessing superior mechanical strength and configurational stability, these are also important factors when it comes to being able to recycle the individual materials in the used packaging laminate as far as is possible, and being able, by recovering and recycling them in as pure form as possible, to re-use these individual materials. For example, there has long been a need in this art to be able to recycle the fibre content of the packaging laminate (its paper or paperboard fraction), but because of the powerful adhesive bond between the paper or paperboard layer and the adjacent layers, it has proved difficult to separate these layers from one another without a significant loss of fibres which adhere to the plastic after the separation treatment.

WO97/16312 of the applicant discloses a delaminable packaging material wherein paper is adhered to adjacent layers via a water-soluble polymer such as starch or polyvinyl alcohol.

There remains a need to realise a packaging laminate which, despite good integrity and good internal cohesion between the individual layers of the packaging laminate, is easy to recycle without excessive material losses. Premature delamination e.g. in the filling machine should be avoided, on the other hand. The fibre content (the paper or paperboard) and the polymer content of the packaging laminate should be available for reuse in as pure a form as possible.

A third aspect of sustainability is reducing the amount of polymer used in the laminated packaging material. A high proportion of fibre content is desirable.

The following discussion relates to knowledge of the inventors and applicant company, which is not admitted to form part of the prior art.

Reducing the amount of polymer in the intermediate bonding (lamination) layer to below 10-15 gsm was considered by the applicant to be very difficult or impossible when working with the traditional polymer or aluminium foil barriers. A high thickness of a melt extruded polymer layer holds more heat energy, which can transform into a high bonding energy when laminated between adjacent web surfaces under pressure and cooling, as the layers are moving through a lamination roller nip. Lower grammage weight of the polymer, which is normally LDPE**,** in the case of aluminium foil laminates, was always avoided, as it was known to reduce bonding strength between the paperboard and the foil.

Reduced adhesion may cause delamination and other defects in subsequent handling of the laminated material in the filling and packaging machines as well as later through the value chain in transport and distribution.

Under a microscope, there may be seen defects in the form of air entrapments or air pockets along the interface between a substrate layer and a thin extruded layer of hot thermoplastics. Too many such defects have not hitherto been accepted by the applicant, because they too were believed to deteriorate adhesion and laminate layer integrity. Such air entrapments may cause blistering of air-tight laminate layers and even breakage, if the air entrapment is heated to overpressure, such that the air pocket suddenly bursts. Breakage is a particular risk in the case of a thin and brittle aluminium foil being located adjacent to, or in the way of, such an air pocket.

When laminating the paperboard to a barrier-coated paper substrate, defects in the form of air entrapments or air pockets have also been seen along the interface between the paper barrier layer and the extruded intermediate bonding layer, as well as between the paperboard layer and the intermediate bonding layer. These air entrapments have also been believed by the applicant to cause bad adhesion by delamination or even breakages of laminate layers, by forming small steam explosions, i.e. so-called "blisters", thus jeopardizing package integrity. Blistering may occur due to exposure to heat, such as during heat sealing. Paper barrier substrates are expected to cause some difficulties with blistering, also because of the inherent moisture content of the paper. High frequency induction heat sealing is also expected to cause difficulties, because heat is induced from the metallised layer, which is positioned next to the moist paper.

Reducing the thickness of an extruded laminate layer in the laminated material of the invention will further increase the number of air entrapment defects. This is because the thinner the layer, the more difficult it is to cover the roughness of the paper surfaces. The effect of layer thickness on bubble defects in extrusion coating is generally discussed in Sollogoub et al., Polymer Engineering and Science, 2011, 51 (2), pp. 347-357.

To be sure to obtain good adhesion and avoid delamination or other laminate integrity issues, a lamination layer of at least 15 gsm (grammes per square metre, g/m²) has thus been considered necessary by the applicant in a portion package using an 80 mN paperboard bulk layer and any barrier layer. This has been the manufacturing minimum standard amount of the lamination layer in all laminates produced for liquid carton packaging so far and has also been the guideline in developing liquid carton packaging laminates configured around a paper-based, non-foil, barrier.

### Summary of the invention

In a first aspect, the invention relates to a laminated packaging material for packaging of liquid or semi-liquid food products, comprising as layers of a layer sequence:
- an outermost protective material layer;
- a bulk layer of paper or paperboard or other cellulose-based material;
- an intermediate bonding layer of polyethylene-based thermoplastic polymer applied via melt extrusion lamination in an amount of 5 to 10 g/m²;
- a gas barrier layer bonded to the bulk layer via the intermediate bonding layer, the gas barrier layer comprising a barrier substrate of paper or paperboard or other cellulose-based material and at least one barrier material coating layer, the paper barrier substrate being adjacent to the intermediate bonding layer; and
- one or more inside polymer layers, comprising an innermost liquid-tight, heat sealable material layer.

The laminated packaging material may comprise at least one laminated opening hole in which a hole in the bulk layer is covered by the other layers of the laminated packaging material.

Preferably, the laminated packaging material provides oxygen barrier properties and water vapour barrier properties.

Preferably, the oxygen transmission rate of the laminated packaging material at 100 % O₂/23 °C/50% RH is 10 cm³/(m²·24h) or less, e.g. 1.0 cm³/(m²·24h) or less, such as 0.5 cm³/(m²·24h) or less, more preferably 0.4 cm³/(m²·24h) or less, most preferably 0.3 cm³/(m²·24h) or less.

In a second aspect, the invention relates to a method of making a laminated packaging material as described above, comprising the steps of:
- laminating the bulk layer to the gas barrier layer via the intermediate bonding layer by means of melt extrusion, optionally with surface pre-treatment of the paper substrate layer; and
- applying the outermost and inside polymer layers.

In a third aspect of the invention there is provided a packaging container comprising the laminated packaging material described above.

According to an embodiment, the packaging container is manufactured at least partly from the laminated packaging material of the invention, and according to a further embodiment it is made in its entirety of the laminated packaging material.

In a fourth aspect of the invention there is provided a method of making the packaging container.

In a fifth aspect there is provided a method of recycling the packaging material or container, comprising repulping of the laminated packaging material or a portion thereof.

All features described in connection with any aspect of the invention can be used with any other aspect of the invention.

### Detailed description

By the term "long-term storage", used in connection with the present invention, it is meant that the packaging container should be able to preserve the qualities of the packed food product, i.e. nutritional value, hygienic safety and taste, at ambient conditions for at least 1 or 2 months, such as at least 3 months, preferably longer, such as 6 months, such as 12 months, or more.

By the term "package integrity", is generally meant the package tightness, i.e. the resistance to leakage or breakage of a packaging container. The term encompasses the resistance of the package to intrusion of microbes, such as bacteria, dirt, and other substances, that may deteriorate the filled food product and shorten the expected shelf-life of the package.

One main contribution to the integrity of a package from a laminated packaging material is provided by good internal adhesion between adjacent layers of the laminated material. Another contribution comes from the material resistance to defects, such as pinholes, ruptures, and the like within each material layer itself, and yet another contribution comes from the strength of the sealing joints, by which the material is sealed together at the formation of a packaging container. Regarding the laminated packaging material itself, the integrity property is thus mainly focused on the adhesion of the respective laminate layers to their adjacent layers, as well as the quality of the individual material layers. Regarding the sealing of the packages, the integrity is mainly focussed on the quality of the sealing joints.

The term "liquid or semi-liquid food" generally refers to food products having a flowing content, i.e. including food products having a high viscosity, like sauces, pastes and soups, and such food products that optionally may contain pieces of food. Dairy and milk, soy-, rice-, grain- and seed- drinks or liquids, juice, nectar, still drinks, energy drinks, sport drinks, coffee or tea drinks, coconut water, wine, soups, crushed tomatoes, sauce (such as pasta sauce) and olive oil are some non-limiting example of food products contemplated.

The term "aseptic" in connection with a packaging material and packaging container refers to conditions where microorganisms are eliminated, inactivated or killed. Examples of microorganisms are bacteria and spores. Generally an aseptic process is used when a product is aseptically packed in a packaging container. For the continued asepticity during the shelf-life of the package, the package integrity properties are of course very important. For long-term shelf-life of a filled food product, it may furthermore be important that the package has barrier properties towards gases and vapours, such as towards oxygen gas, in order to keep its original taste and nutritional value, such as for example its vitamin C content.

By the term "bulk layer" is normally meant the thickest layer or the layer containing the most material in a multilayer laminate, i.e. the layer which contributes most to the mechanical properties and the dimensional stability of the laminate and of packaging containers folded from the laminate, such as paperboard or carton.

The term "paper barrier substrates" includes papers, paperboard or other cellulose-based substrates.

The term "polyethylene" (PE) refers to a polymer comprising ethylene monomers at from about 90 to 100 mol%.

Low density polyethylene (LDPE) has a density of 917 to 930 kg/m³. It is typically polymerised from ethylene monomers alone and has a branched polymer chain structure (on about 2 % of the carbon atoms), such that its molecules are less tightly packed and less crystalline, and therefore its density is lower than for linear polyethylenes, such as linear low density polyethylene (LLDPE) or high density polyethylene (HDPE).

The term "linear low density polyethylene" (or "LLDPE") covers all linear low density polyethylenes, including "ZN-LLDPE" polymerised by means of Ziegler-Natta type catalysts as well as "m-LLDPE" polymerised by catalysts of so-called "constrained geometry", or "single-site" catalysts, such as "metallocene" catalysts, and other linear low density polyethylenes. Both ZN-LLDPE and m-LLDPE are typically produced by copolymerising an ethylene monomer with a C₄-C₈, more preferably a C₆-C₈, alpha-olefin alkylene monomer, the latter in the presence of a metallocene catalyst. 1 to 10 mol%, suitably 8 to 10 mol%, comonomer content is typical. LLDPE has significant numbers of short branches. It differs structurally from conventional LDPE because of the absence of long chain branching. LLDPE polymer typically has a narrower molecular weight distribution than conventional LDPE (this is true for m-LLDPE especially) and significantly different rheological properties.

For the lower density type of polyethylenes, i.e. having a density below 1 kg/m³, one micrometer thickness in a melt extrusion applied layer roughly corresponds to about 0.90-0.94 g/m² applied amount (grammage) of the polymer on the substrate, i.e. the grammage value is a bit lower than the micrometer thickness and a realistic conversion is possible regarding melt applied polymers, as they form a layer onto a substrate surface without penetrating into and below the surface of the substrate layer.

High density polyethylene, HDPE, has a density of 930 to 970 kg/m³. Up to 2 mol% comonomer content is typical. The lack of branching is ensured by an appropriate choice of catalyst (e.g. ZN catalysts) and reaction conditions.

The term "dispersion coating" (also called "liquid-film coating") herein relates to a coating technique in which an aqueous or substantially aqueous dispersion, suspension, emulsion or solution of a polymer is applied to the surface of a substrate layer, usually in the form of a continuous web, to form a solid, substantially non-porous film after drying. The term "dispersion" covers thus also any solution, suspension, emulsion or solution or mixes thereof, that would be capable of providing such a coating after drying. The aqueous dispersion may comprise fine polymer particles in suspension or emulsion, and thus be a latex. The term "water-dispersible" includes polymers which are capable of forming aqueous dispersions, and which preferably form coatings which are redispersible in water.

"Repulping" refers to mechanical treatment of material in water to provide a pulp comprising fibre content and water, and optionally a coarse reject fraction of non-fibre material.

"Fibre yield" refers to the wt% of the bulk layer which is recovered as fibre content in pulp.

### Bulk Layer

A paper or paperboard bulk layer for use in the invention usually has a thickness of from about 100 µm up to about 600 µm, and a surface weight of approximately 100 to 500 g/m² (gsm), preferably about 200 to 300 g/m², and may be a conventional paper or paperboard of suitable packaging quality. The purpose of the bulk layer in the laminated packaging materials of the present invention is to provide dimensional stability, rigidity and stiffness to packaging containers, e.g. for use in wet and humid conditions and/or for storage of liquids and wet (heavy) food products. For larger packages (e.g family packs of 1L size) a paperboard of 400 to 500 µm is preferred. For portion packs of 150 to 350 mL size, a bending stiffness of 80 mN is preferred.

### Gas Barrier Layer

The gas barrier layer is a multilayer gas barrier layer comprising a paper barrier substrate and a barrier material layer (also referred to as a "barrier material coating layer"). The gas barrier layer is arranged in the laminated packaging material with the barrier material layer directed towards the inside polymer layer(s) (CFI, coating facing inwards), such that the back side of the paper barrier substrate is adjacent to the intermediate bonding layer.

Paper barrier substrates may be based on any type of native, fibrous cellulose, or may include also partly, or major amounts of, fibrillar cellulose. Kraft paper is preferred to greaseproof paper for recycling. The inclusion of nanofibrillar cellulose or "fines" is not preferred.

Normally, a suitable paper or cellulose-based substrate material for carrying the barrier coating of the invention should be thin, such as 60 g/m² or below, such as 50 g/m² or below, preferably 45 g/m² or below and more preferably 40 g/m² or below. On the other hand, substrates with a lower grammage than 30 g/m² may be mechanically too weak and/or less dimensionally stable, exhibiting shrinkage or curling problems. It is thus preferred to use papers having a grammage of from 30 to 50 g/m², such as from 35 to 45 g/m².

For optimal quality of subsequently applied barrier coatings, the top surface of the paper substrate may be smooth, such as below 150 ml/min Bendtsen, such as below 100 ml/min, such as below 80 ml/min, such as below 50 ml/min, such as below 30 ml/min Bendtsen. If the paper substrate surface is thus smooth, the optional base coating will also be even and smooth, which will further enable the barrier coatings to be even and smooth and without defects, thus of better quality.

For some embodiments, a paper substrate may have a higher density, such as above 800 kg/m³, preferably above 900 kg/m³, more preferably above 1000 kg/m³. Such high densities may be obtained by compressing the paper web in a calendering operation, preferably a supercalendering process.

A base coating may be particularly important for the paper barrier substrate as it closes pores and provides a smoother surface on the top side surface of the paper. A further, similar coating may be applied on the opposite side of the paper for the purpose of providing the paper with symmetry regarding mechanical and flexibility properties e.g. to prevent curling in the longitudinal direction of a thin paper which is wet coated on one side only. The base coating layer may be a clay coating layer, i.e. a coating layer comprising an emulsion binder and high concentration of pigments or inorganic particles, such as i.a. kaolin or CaCO₃. Such claycoat layer may also be referred to as a printable pigment coating. For use in the present invention its role is to provide a smooth and dense surface, and optionally also to add some flexibility to the paper, even if the purpose is not to be used as a print surface. A claycoat base coating may be used with or without an additional pre-coating layer as discussed below. Alternatively, a base coating may be based on starch, starch derivatives or modified starch, or comprise a cellulose-ether, such as carboxy methyl cellulose, CMC, hydroxyethyl cellulose, HEC, hydroxypropyl cellulose, HPC, or hydroxypropylmethyl cellulose, HPMC. The base coating layer material needs to be relatively thermostable and resistant to melting or deterioration under influence of heating, during heat sealing.

A pre-coating layer having barrier properties, preferably gas barrier properties, may be formed on the paper barrier substrate (with optional base coating as discussed above). This pre-coating layer ensures that the surface to be further coated is smooth and may also provide, or further contribute to, oxygen barrier properties. A pre-coating layer material should be selected which is thermostable and resistant to melting or deterioration under influence of heat sealing; suitably therefore it has a higher melting point than the innermost heat seal layer.

The pre-coating layer is suitably applied by aqueous dispersion coating and subsequent heat drying to evaporate the water.

Suitable polymers for the pre-coating layer may be selected from the group consisting of polyvinylalcohol (PVOH, PVAL), polyethylenevinylalcohol (EVOH, EVAL), starch, modified starch, starch derivatives, nano-/microfibrillar cellulose (NFC/MFC/CNF) and nanocrystalline cellulose (NCC/ CNC). Preferred polymers are PVOH, starch, starch derivatives and modified starch. The thickness of the pre-coating layer is suitably from 0.5 to 3 µm, such as about 1.5 µm.

The barrier material layer preferably comprises at least one vapour-deposited or dispersion-coated, i.e. liquid film-coated, coating layer.

Thin vapour-deposited layers are normally merely nanometer-thick, i.e. have a thickness in the order of magnitude of nanometers, for example of from 1 to 500 nm (10 to 5000 Å), preferably from 1 to 200 nm and more preferably from 1 to 100 nm e.g. from 50 to 100 nm.

The barrier material layer may comprise a vapour-deposited coating comprising metal, metal oxide, silicon oxide, amorphous carbon or diamondlike carbon (DLC). Such barrier material layers typically provide barrier properties against both oxygen and water vapour. Preferred such barrier materials are aluminium, aluminium oxide and silicon oxide.

Vapour-deposited metal layers (also referred to herein as "metallised layers") are preferred. Metallised layers generally provide a lower barrier to oxygen gas but provides higher water vapour barrier properties. A suitable optical density of a metallised layer is at least 1.5, preferably at least 1.8 and in some cases at least 2.5, such as at least 3.0.

The vapour-deposited barrier material layer may be applied by means of physical vapour deposition (PVD) or chemical vapour deposition (CVD), for example by plasma enhanced chemical vapour deposition (PECVD). PVD is typically used for metallised layers and is also applicable to metal oxide and silicon oxide layers. Normally, an aluminium metallised layer inherently has a thin surface portion consisting of an aluminium oxide due to the nature of the metallisation coating process used. Silicon oxide and DLC coatings may, for example, be applied by a PECVD process. Preferably, a hydrocarbon gas, such as e.g. acetylene or methane, is used as process gas in a plasma for producing a coating of DLC.

The barrier-coated surface of the paper barrier substrate and/or the backside of the paper substrate are preferably surface treated to improve adhesion to adjacent melt extruded layers. Suitable surface treatments may be Corona discharge treatments, or plasma treatment.

### Intermediate Bonding Layer

The gas barrier layer is bonded to the bulk layer by a melt-extruded intermediate bonding layer of thermoplastic polymer (also referred to as a "lamination layer") in an amount of 5 to 10 g/m².

The intermediate bonding layer is preferably applied in an amount of 5 to 9 g/m², more preferably 6 to 9 g/m², e.g. 7 to 9 g/m² or 7 to 8 g/m². In a preferred embodiment, an amount of 8 g/m² is used.

According to an embodiment the intermediate bonding layer comprises polyolefin, such as a lower density polyethylene, e.g. LDPE, LLDPE or m-LLDE and a blend of any two or more of these polymers. The same thermoplastic polyolefin-based materials as listed below for the outermost and innermost layers, and in particular polyethylenes e.g. LDPE, are also suitable for the intermediate bonding layer. In a preferred embodiment, the intermediate bonding layer consists of LDPE.

Alternatively, the intermediate bonding layer may comprise a polyethylene-based polymer having polar functional groups, i.e. an adhesive polymer. Such adhesive thermoplastic polymers may comprise modified polyolefins, which are mostly based on LDPE or LLDPE co-polymers or graft co-polymers with functional-group containing monomer units, such as carboxylic or glycidyl functional groups, e.g. (meth)acrylic acid monomers or maleic anhydride (MAH) monomers, (i.e. EAA or ethylene methacrylic acid copolymer (EMAA)), ethylene-glycidyl(meth)acrylate copolymer (EG(M)A) or MAH-grafted polyethylene (MAH-g-PE). Other examples of such modified polymers or adhesive polymers are so called ionomers or ionomer polymers. A preferred EEA adhesive polymer is Primacor 3540 from Dow.

Thus, the intermediate bonding layer may comprise a polyolefin-based adhesive polymer selected from a lower density polyethylene, e.g. LDPE, LLDPE or m-LLDPE, a co-polymer or graft co-polymers with functional-group containing monomer units, such as carboxylic, maleic anhydride or glycidyl functional groups, ionomers and a blend of any two or more of these polymers.

More precisely, the intermediate bonding layer may comprise a polyolefin-based polymer selected from a lower density polyethylene, e.g. LDPE, LLDPE or m-LLDE, ethylene acrylic acid copolymer (EAA), ethylene methacrylic acid copolymer (EMAA), ethylene-glycidyl(meth)acrylate copolymer (EG(M)A), maleic anhydride grafted polyethylene (MAH-g-PE), ionomer and a blend of any two or more of these polymers. In a further embodiment, the intermediate bonding layer comprises a polyolefin-based polymer selected from low density polyethylene (LDPE), ethylene acrylic acid copolymer (EAA) and ethylene methacrylic acid copolymer (EMAA).

### Other Layers of Laminated Packaging Material

The outer- and innermost layers of thermoplastic polymers do not normally add recognizable barrier properties to migrating gas molecules or small molecules. Their purpose is to provide a direct barrier to water or other liquids from penetrating through to the cellulose-based bulk material and other sensitive layers and to act as an aseptic barrier, maintaining package integrity to protect the filled contents inside the package, as well as preferably being heat sealable.

The outermost layer may be a layer or coating of a protective polymer, to prevent dirt and moisture from reaching the interior of the laminated material, such as a polymer layer, such as a thermoplastic polymer layer. Preferably, this layer is liquid-tight to allow the packages to be soaked in water (such as for cooling on ice) but this is not essential.

Suitable thermoplastics for the outer- and innermost layers are polyolefins such as polyethylene and polypropylene homo- or co-polymers, preferably polyethylenes and more preferably polyethylenes selected from the group consisting of LDPE, LLDPE, m-LLDPE and blends or copolymers thereof. According to an embodiment, the outermost layer is of LDPE, while the innermost layer is a blend composition of m-LLDPE and LDPE (also referred to herein as "mPE") for optimal lamination and heat sealing properties. In a preferred embodiment, the innermost layer comprises 50 to 90 wt% mLLDPE and 10 to 50 wt% LDPE, for example 70 wt% mLLDPE and 30 wt% LDPE. However, lower proportions of mLLDPE such as 10 to 50 wt% e.g. 30 wt% in such blends are also envisaged. A suitable LDPE grade is 19N730 from Ineos. A suitable grade of mLLDPE is Elite 5860 from Dow.

The outermost layer is preferably transparent. In this way, any printed décor pattern applied onto the outside of the bulk layer can be seen. This is useful in informing viewers e.g. about the contents of the package, the packaging brand and other consumer information relevant in retail facilities and/or food shops.

The outermost layer is preferably applied by extrusion coating, in which case it may typically be applied at an amount of from 7 to 12 g/m², such as 7 to 10 g/m², e.g. 8 to 9 g/m². This is lower than the amounts typically used, improving sustainability, and still makes the package liquid-tight towards the external environment.

In separate trials, it has been found that when reducing the thickness of a thermoplastic, melt extrusion coated, outermost polymer coating, a too thin layer may produce small polymer fragments in the recycling repulping operation. The small polymer fragments are difficult or impossible to remove from the fibre recycling stream and are thus undesired. Thus, very low amounts of polymer should typically rather be applied by dispersion coating, but this has the disadvantage that the existing melt extrusion coating equipment in the current production cannot be used. It has now surprisingly been found that in connection to the present invention satisfactory results can be achieved also when applying lower amounts of the outermost layer with melt extrusion coating. This is because a quicker repulping time is enabled by the reduced thickness also of the lamination layer, which thus allows fragmentation of the outermost layer to be avoided. Since the outermost layer has one free surface, that layer is more prone to fragmentation than an interior lamination layer, although the thickness of the layers may be similar or the same.

The inside polymer layers, i.e. the polymer layers located on the inside of the gas barrier layer, may be applied at total thicknesses ranging from 10 to 55 µm, or in an amount of 10 to 55 g/m², such as 15 to 45 g/m². These ranges are particularly suitable for family packs, whereas for portion packs 30 to 40 g/m² may be suitable.

The inside polymer layers may comprise two or more sub-layers which may be of different compositions. The inside polymer layers comprise specifically at least the innermost liquid-tight, heat sealable material layer referred to above. The term "innermost layer" as used herein may thus refer to a sub-layer of the inside polymer layers, in the innermost position to be in contact with the filled food product. An interjacent layer may be adjacent to the innermost layer.

The innermost layer typically provides heat seal properties by melting and being thermowelded across the whole sealing zone; the interjacent layer if present may also take part in heat sealing, e.g. by melting and being thermowelded in part of the sealing zone.

An adhesive layer (also referred to as a "tie layer") may be provided as part of the inside polymer layers, adjacent to the gas barrier layer. The adhesive layer polymer should preferably not participate in the heat sealing, but stay put in place. Suitable materials for the adhesive layer polymer are as for the intermediate bonding layer adhesive polymers discusssed above. Tie layers are typically applied at a thickness of from 3 to 8 g/m².The inside polymer layers (or one or more sub-layers thereof) are preferably applied by extrusion coating. The tie layer may be co-extruded with other inside polymer layers. In particular, the innermost layer may be bonded to the gas barrier layer via a tie layer e.g. of adhesive polymer such as ethylene acrylic acid copolymer (EAA), which is preferably co-extruded with the innermost layer. The inside polymer layers may, alternatively, include a pre-manufactured oriented or non-oriented film. In an embodiment, the innermost layer may be applied in the form of a pre-manufactured oriented or non-oriented film. Preferably, such a film is a thin cast, biaxially oriented film of LLDPE, e.g. of a thickness from 15 to 20 µm, such as 17 µm.

### Method of Making Laminated Packaging Material

The method of making the recyclable laminated packaging material comprises lamination of the bulk layer to the gas barrier layer via the intermediate bonding layer and applying the outermost layer and inside polymerlayers.

The intermediate bonding layer suitably bonds the bulk layer to the gas barrier layer by melt extrusion lamination between a web of the bulk layer and a web of the gas barrier layer, and simultaneously pressing the three layers together while being forwarded through a lamination roller nip, thus providing a laminated structure.

In a preferred embodiment, the bulk layer and gas barrier layer are laminated, followed by application of the inside polymer layers and then the outermost layer (or less preferably followed by application of the outermost layer and then the inside polymer layers). The former order is referred to as "LID" wherein L= lamination of bulk layer to gas barrier layer; I = application of innermost layer to gas barrier layer; D (décor) = application of outermost layer onto bulk layer. The latter less preferred alternative is referred to as "LDI". Alternatively, the bulk layer may be initially joined to the outermost layer before lamination to the gas barrier layer. This order is referred to as "DLI".

### Packaging Container and Method of Making Packaging Container

The packaging container may be made from a web of the recyclable laminated packaging material or from blanks of the recyclable laminated packaging material, as discussed in more detail below; various possible shapes of container are indicated.

According to a further embodiment, the packaging container formed from the laminated packaging material may be partly sealed, filled with liquid or semi-liquid food and subsequently sealed, by sealing of the packaging material to itself, optionally in combination with a plastic opening or top part of the package. Induction heat sealing is preferred for laminated packaging materials containing metallised barrier layers. Ultrasonic heat sealing and hot air sealing are alternative possibilities.

### Recycling of Laminated Packaging Material or Packaging Container

In a further embodiment, the invention relates to a method of recycling a laminated packaging material or a packaging container as described above, comprising repulping of the laminated packaging material or a portion thereof. Repulping of packaging containers typically takes more time to achieve a given fibre yield than repulping of flat laminated packaging material.

Repulping may be carried out without dry cutting of the laminated packaging material. This is desirable to reduce fragmentation of non-fibre layers which may lead to this material being retained in the fibre pulp. Suitably, 9-15 wt% of dry packaging containers are mixed with water.

Alternatively, the laminated packaging material may be first dry cut into small pieces or strips.

The material to be repulped is suitably fed into a conventional pulper and mechanically processed by agitation in hot water at 40-60 °C e.g. 43 °C . This causes the fibres of the bulk layer and paper barrier substrate to separate from adjacent layers without fibres adhering to and accompanying the plastic surface. The fibres and water form a pulp. The pulp can be physically separated from the inside polymer layers, intermediate bonding layer and outermost layer ("coarse reject"), suitably via a separation plate with holes of e.g. 10 mm diameter, to form a "fibre stream" recycling fraction.

The fibre yield after30 minutes of repulping should be at least 97 wt%, more preferably at least 99 wt%. This target fibre yield may now by the present invention be reached already within 20 minutes even from laminated packaging materials without aluminium foil and based on barrier-coated paper substrates as a gas barrier layer.

### Description of preferred embodiments

In the following, preferred embodiments of the invention will be described with reference to the drawings, in which:
Fig. 1 schematically illustrates a cross-section of a recyclable laminated packaging material including a metallised multilayer gas barrier layer, according to an embodiment of the present invention.
Figs. 2a-c schematically illustrate a method of producing the laminated packaging material of Fig. 1.
Fig. 3a-c show typical examples of liquid carton packaging containers produced from the laminated packaging materials of Fig. 1.
Fig. 4 shows the principle of how liquid carton packaging containers may be manufactured from the laminated packaging materials in a continuous, roll-fed, form, fill and seal process.
Fig. 5 is a graph showing the yield of usable fibre over time derived by repulping materials of the example.

### Examples

In Example 1, a recyclable laminated packaging material PM12029 was prepared with the structure of outermost layer / bulk layer / intermediate bonding layer / gas barrier layer / inside polymer layers (tie layer, interjacent layer, innermost layer)

The example had the following structure:
12 g/m² LDPE / paperboard (bulk layer) / 8 g/m² LDPE / PVOH coated and Al metallised 39 g/m² kraft substrate paper / 6 g/m² EAA adhesive / 20 g/m² LDPE / 17 g/m² LLDPE film

The paperboard bulk layer was CLC/C Duplex liquid packaging board BK from Billerud, Sweden of bending stiffness 80 mN and basis weight 200 g/m², clay-coated on the outer surface only and with an uncoated fibrous inner surface.

The LDPE in the outermost layer, intermediate bonding layer interjacent layer of the inside polymer layers was 19N730 from Ineos.

The EAA in the tie layer was Primacor 3540 from Dow.

The innermost LLDPE film was SealTOUGH 18X400 from Jindal films.

The laminated packaging material was formed as follows.

The paperboard web was unwound, printed on its outer surface and provided with creasing lines for subsequent folding in register with the thus printed décor, and again wound onto a reel. LID lamination was conducted. Thus, the paperboard was melt extrusion laminated to the gas barrier layer with LDPE. The gas barrier layer was oriented CFI i.e. with the metallised coating directed towards the inside polymer layers and the paper barrier substrate directed towards the paperboard bulk layer. The tie layer and interjacent layer of the inside polymer layers were co-extruded between the inner surface of the gas barrier layer and the innermost layer, in this case being a pre-manufactured film, and the outermost layer was then extruded onto the outer surface of the paperboard.

In Comparative Example 2, a laminated packaging material PM12073 was prepared corresponding to Example 1 except that 15 g/m² LDPE was used in the intermediate bonding layer.

Repulping tests were carried out on the laminated packaging materials of Example 1 and Comparative Example 2 in a Kadant Auto Lab Pulper which mimics commercial batch pulpers for used beverage cartons. 9 % dry content in water was used at a temperature of 43 °C. The material was cut prior to repulping into pieces of dimensions 5 x 5 cm.

To determine the fibre yield, samples were taken at 10, 15, 20, 25 and 30 minutes, the sample of pulp and material mix was gently rinsed by handwashing 4 times, to ensure that already lose cellulose fibres were separated from the polymer pieces and the pulp was passed through a separation plate with holes of 10 mm diameter, with coarse reject being retained. The fibre content was calculated based on the material fractions including the reject dry weight and the ply grammage values, taking account also of small fibre flakes lost from the recycling fibre stream in the washing liquid, caught as shives in a Somerville sieve with 0.15 mm slits. Polymer pieces, i.e. fragmented polymer caught in the Somerville sieve, were picked out manually using tweezers.

It was concluded that substantially no polymer was caught as small residues or fragments in the Somerville sieve and that a good, expected amount of polymer was retained in the polymer recycling stream and in the Somerville sieve, taken together. There was no difference between Example 1 and Comparative Example 2 regarding formation of small polymer fragments. It seems thus to be safe to reduce the polymer applied in the intermediate bonding layer between the bulk layer and the paper barrier, to 7 to 10 g/m², from this point of view.

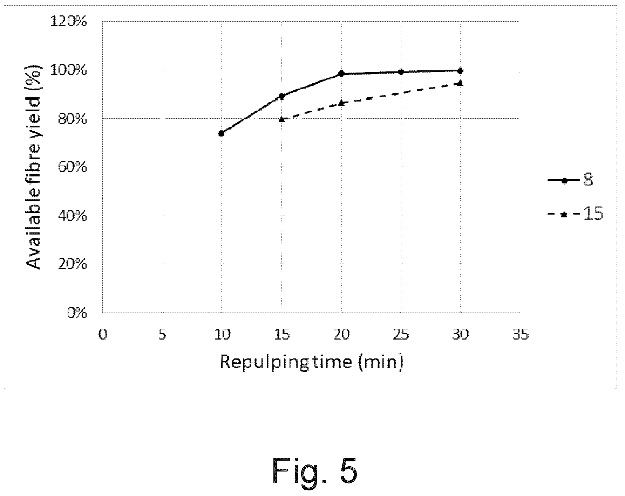

The results are shown in Fig. 5.

Fibre yield was tested against a target of 97% yield after 30 minutes. The available fibre yield was calculated as retrieved weight percentage of fibres based on the initial amount of fibres in the laminated material. The threshold was achieved for the laminated packaging material of Example 1 (which was almost fully repulped after 20 minutes) but not for the laminated packaging material of Comparative Example 2.

In Comparative Example 3, three variants of a same laminated material only having different amounts of LDPE in the outermost layer were studied in a similar recycling repulping process, however focusing on to what degree the outermost layer was fragmented.

The laminate structures were very similar to the ones of Example 1 and Comparative Example 2 but had a thicker intermediate bonding layer of 20 g/m² LDPE between the paperboard and the gas barrier layer including the same paper barrier substrate, so as not to influence what happened with the outermost layers. Such a thick intermediate bonding layer would require a repulping time of at least 30 minutes to properly delaminate the two paper layers from each other. The laminated materials had an innermost liquid tight and heat sealable layer of a blend of about 70 wt % mLLDPE and 30 wt % LDPE. The innermost layer had been melt co-extrusion coated together with an adhesive polymer being an ethylene acrylic acid (EEA) onto the inner side of the gas barrier layer. The principal structure of the tested laminates was: / 6- 8- 12 g/m² LDPE / paperboard (bulk layer) / 20 g/m² LDPE / PVOH coated and Al metallised 39 g/m² Kraft substrate paper / 6 g/m² EAA adhesive / 19 g/m² blend of mLLDPE and LDPE at 70:30 weight ratio /

Each of the laminated materials was again cut prior to repulping into pieces of dimensions 5 x 5 cm. A number of pieces were picked out of the pulper after different pulping times (10, 20 and 30 minutes) and studied. The outermost layer is the layer that will delaminate first because it has no adhesive layer and is the thinnest layer. It was thus studied whether the outermost layer had come off and was fragmented or not at the various repulping times. It was found that the plastic pieces that came off were close to intact from the laminates having 12 and 8 g/m², respectively, of the outermost LDPE layer even after 30 minutes of repulping time, while the laminate having only 6 g/m² of LDPE in the outermost layer already produced fragmented plastic pieces after 20 minutes of repulping time.

Similarly to above, the reject from the Somerville sieve (0.15 mm slits) (mostly consisting of the outermost layer but also having some residues of aluminium metal-plastic) was studied after separation of fibre residues. It was found that the laminate having an outermost layer of 8 g/m² generated slightly more residue than the laminate with 12 g/m² outermost layer after 20 minutes of repulping time, but more after 30 minutes of repulping time.
It was thus concluded that it should be possible to reduce the outermost layer of LDPE down to 8 g/m², as long as the shorter repulping time of 20 minutes can be kept to, to avoid fragmented plastics in the fibre stream. It is undesirable for small polymer fragments to pass through the coarse reject separation plate (with holes of 10 mm diameter as explained above), because no Somerville sieve to separate smaller fragments is typically used in industrial repulping processes. Inclusion of small plastic residues and fibre flakes (shives) in the fibre stream leads to a lower quality pulp of lower value.

Moreover, it has been seen that the air entrapments between the intermediate bonding or lamination layer and the adjacent paperboard and paper barrier substrate, respectively, have a positive effect in that blistering effects upon heat exposure, such as during heat sealing, may be reduced in a similar laminate (Example 1a) to the laminate of Example 1 (the only difference being that it has an innermost layer of a different pre-manufactured film), in comparison to a similar laminate (Comparative Example 2a) only having the same innermost layer of a (different) pre-manufactured film and a thicker lamination layer as in Comparative Example 2. From exposing such similar and comparative laminated materials having an intermediate bonding layer of 8 g/m² LDPE and 15 g/m² LDPE, respectively, to hot air, in a hot air sealing rig, it was concluded that blistering occurred sooner, at a lower temperature of 320°C, in the comparative laminate (Comparative Example 2a) having 15 g/m² of the intermediate bonding LDPE layer, while no blistering was seen until 350 °C was reached for the laminate (Example 1a) having only 8 g/m² LDPE in the intermediate bonding LDPE layer. The temperature was the set temperature for the hot air stream ejected by a nozzle towards the inside of the material. What is important is that there was a 30 °C difference in the initiation temperatures for blistering effects from the lamination layer, which thus widens the temperature window that may be used for the heat sealing operations.

Similarly, it has been seen that other heat sealing methods also generate more blistering in a comparative laminate having 15 g/m² or more polymer in the intermediate bonding layer, than in the same laminate having only 8 g/m² of the intermediate bonding layer. A more thermally robust material has thus been provided by the present invention.

Further, relating to the attached figures:

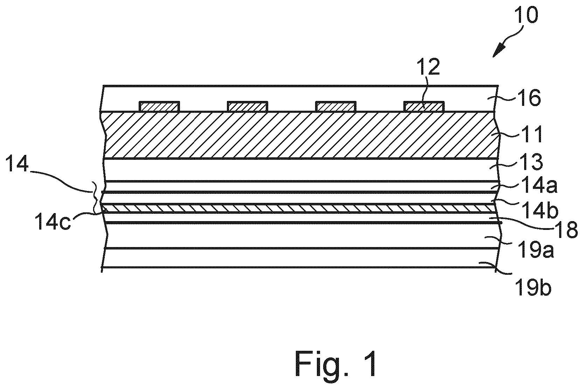

In Fig. 1, a laminated packaging material 10 for liquid carton packaging is shown in cross-section, in which the laminated packaging material comprises a paperboard bulk layer 11, having a bending force of 80 mN and a grammage weight of about 200 g/m². The bulk layer 11 is clay-coated on its outer surface and has an uncoated fibrous inner surface. The laminated packaging material 10 further comprises an outer liquid-tight and heat-sealable layer 16 of polyolefin applied on the outside of the bulk layer 11, which side is to be directed towards the outside of a packaging container produced from the laminated packaging material. The layer 16 is transparent to show the printed décor pattern 12, applied onto the outside of the bulk layer of paperboard.

The polyolefin of the outer layer 16 is a conventional low density polyethylene (LDPE) of a heat sealable quality, but could also include further similar polymers, including LLDPEs. It is applied at an amount of 12 g/m².

The bulk layer 11 is bonded via an intermediate bonding layer of LDPE 13 to a gas barrier layer 14. The intermediate bonding layer is applied at an amount of about 8 g/m².

The gas barrier layer is a multilayer gas barrier layer comprising a paper barrier substrate 14a coated with a PVOH layer 14b and a vapour deposited aluminium barrier material layer 14c. The gas barrier coatings 14b and 14c are directed towards the inside polymer layer(s) 18, 19 (CFI).

The gas barrier layer 14 is bonded on its inner side to one or more inside polymer layers 18, 19a, 19b via a tie layer 18 of the inside polymer layers, the tie layer 18 being of a polymer having polar functional groups for improved adhesion, i.e. an adhesive polymer. The adhesive polymers are usually graft modified polyethylene or copolymers of ethylene with functional monomers, in this case an ethylene acrylic acid copolymer (EAA).

The inside polymer layers comprise an innermost liquid-tight and heat-sealable layer 19b, which is arranged to be directed towards the inside of a packaging container produced from the laminated packaging material, i.e. the layer 19b will be in direct contact with the packaged product. This innermost layer 19b is to form strong transversal heat seals of a liquid packaging container made from the laminated packaging material. The innermost layer 19b consists of a pre-manufactured, cast and biaxially oriented film of LLDPE, such as primarily comprising m-LLDPE, and has a thickness of 18 µm. The innermost layer is laminated to the inside of the gas barrier layer with an interjacent layer 19a of LDPE of about 20 g/m².

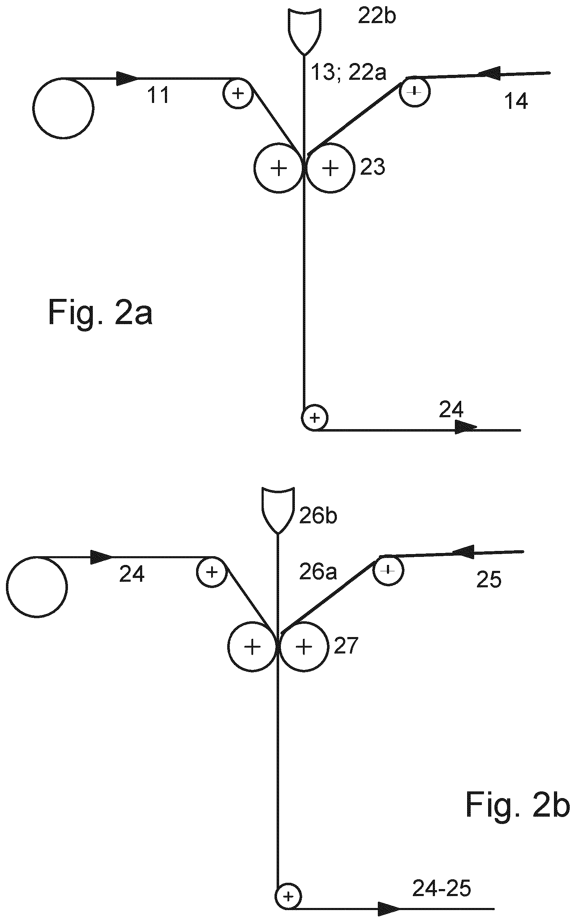

Fig. 2a shows the principle for parts of the process for manufacturing of the laminated packaging material 10 of Fig. 1. In a first step, the bulk layer 11 is laminated to the gas barrier layer 14 by the intermediate bonding layer 13 of LDPE. The intermediate bonding layer 13 is formed by melt extrusion of a thin polymer melt curtain 22a from a die 22b between the webs comprising the bulk layer 11 and the gas barrier layer 14, respectively, and thus laminating these layers to each other, as all three webs pass through a nip 23 between a press roller and a chilled roller, cooling the laminated material 24 to properly solidify the extruded intermediate bonding layer 13 of LDPE. The lamination temperature is about 300 °C.

The resulting pre-laminate 24 is forwarded to be wound up on a reel for intermediate storage, or directly to subsequent lamination operations.

Fig. 2b shows, in a second step, how the pre-laminate 24 of the bulk layer 11 and the gas barrier layer 14, is laminated to a pre-manufactured film 25 intended to constitute the innermost, liquid-tight, heat sealable layer 19b, by melt co-extruding a thin polymer melt curtain 26a (comprising the two molten layers being the tie layer 18 and interjacent layer 19a of an adhesive polymer and LDPE, respectively) from an extrusion die 26b. The adhesive polymer of an ethylene acrylic acid copolymer (EAA) and the LDPE layer are coextruded together such that the EAA tie layer 18 will be adjacent to the aluminium barrier material layer 14c and the LDPE interjacent layer 19a will be adjacent to the pre-manufactured film innermost layer 19b. The molten film curtain is melt extruded between the webs comprising the pre-laminate 24 and the innermost, pre-manufactured film innermost layer 19b, thus laminating the two webs to each other, as all four layers pass through a nip 27 between a press roller and a chilled roller, cooling the laminated material 24-25 to properly solidify the extruded tie layer 18 and interjacent layer 19a of EAA and LDPE respectively. The lamination temperature is about 280 and 300 °C of the two respective layers 18 and 19a.

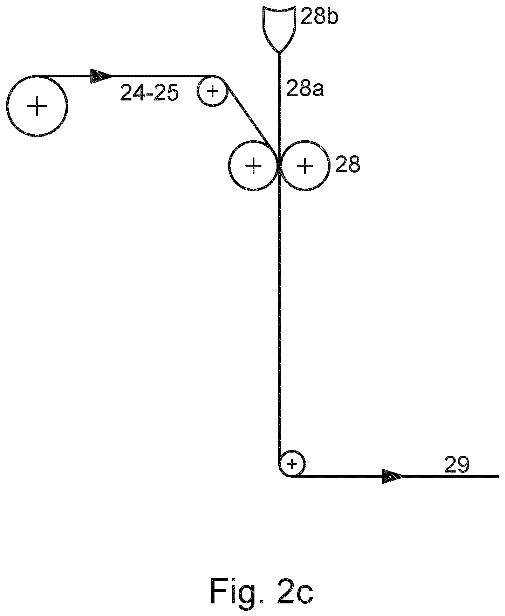

In Fig. 2c, the resulting web of the laminated material 24-25 of the pre-laminate 24 and the pre-manufactured film innermost layer 19b is forwarded to a further lamination step, preferably directly from the lamination operation of Fig. 2b, where it passes a further extruder feedblock and die 28b and a lamination nip 28, where a molten polymer curtain 28a of the LDPE which is to form the outermost layer 16 of the laminated packaging material 10 is joined and coated onto the other side of the laminated material 24-25, i.e. on the non-laminated print side of the bulk layer 11. This forms the finished laminated packaging material 29; 10, which is finally wound onto a storage reel, not shown. This order of steps is LID. This coextrusion coating step at lamination roller nip 28 may alternatively be performed before other steps of Fig. 2a in the opposite order (DLI).

The bulk layer 11 may be provided with holes (not shown) which are overlaminated by the other layers of the laminated packaging material 10 to form pre-laminated holes.

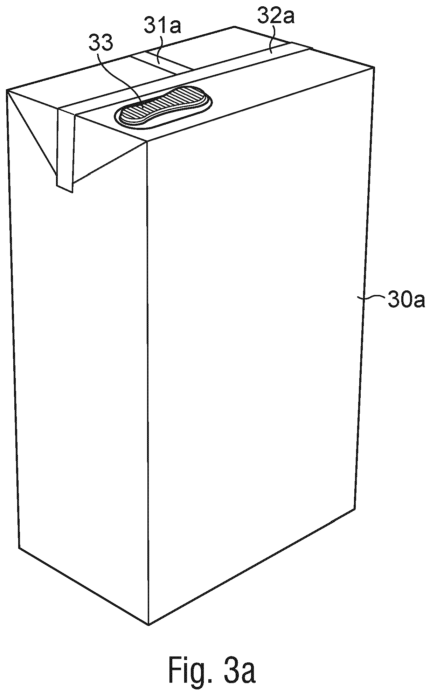

Fig. 3a shows an embodiment of a packaging container 30a produced from a laminated packaging material 10 according to the invention. The packaging container is particularly suitable for beverages, sauces, soups or the like. Typically, such a package has a volume of about 100 to 1000 mL. It may be of any configuration, but is preferably brick-shaped, having longitudinal and transversal seals 31a and 32a, respectively, and optionally an opening device 33 over a pre-laminated hole (not shown In another embodiment, not shown, the packaging container may be shaped as a wedge. In order to obtain such a "wedge-shape", only the bottom part of the package is fold formed such that the transversal heat seal of the bottom is hidden under the triangular corner flaps, which are folded and sealed against the bottom of the package. The top section transversal seal is left unfolded. In this way the only partly folded packaging container still is easy to handle and dimensionally stable enough to put on a shelf in the food store or on any flat surface.

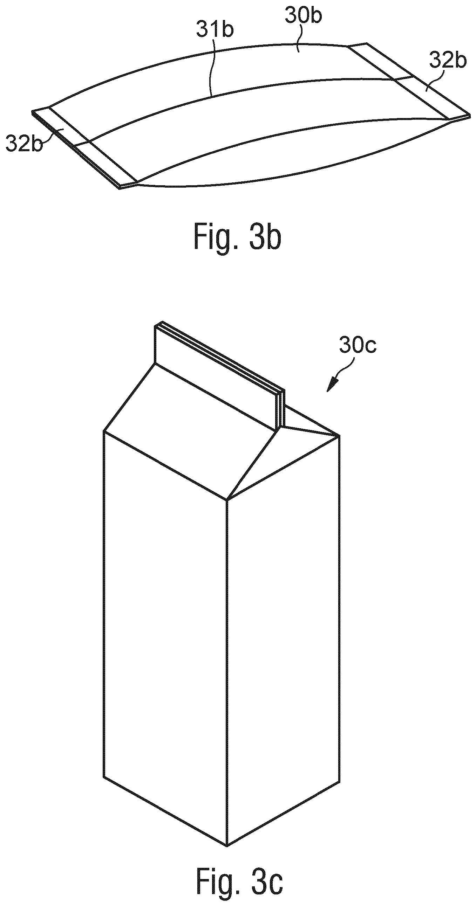

Fig. 3b shows an alternative example of a packaging container 30b produced from an alternative laminated packaging material 10 according to the invention. The alternative laminated packaging material is thinner by having a thinner paper bulk layer, and thus it is not dimensionally stable enough to form a parallelepipedal or wedge-shaped packaging container and is not fold formed after transversal sealing 32b. The packaging container will remain a pillow-shaped pouch-like container and be distributed and sold in this form.

Fig. 3c shows a gable top package 30c, which is fold-formed from a precut sheet or blank, from the laminated packaging material 10. Optionally an opening device and/or a pre-laminated hole (not shown) may be present. Also flat top packages may be formed from similar blanks of material.

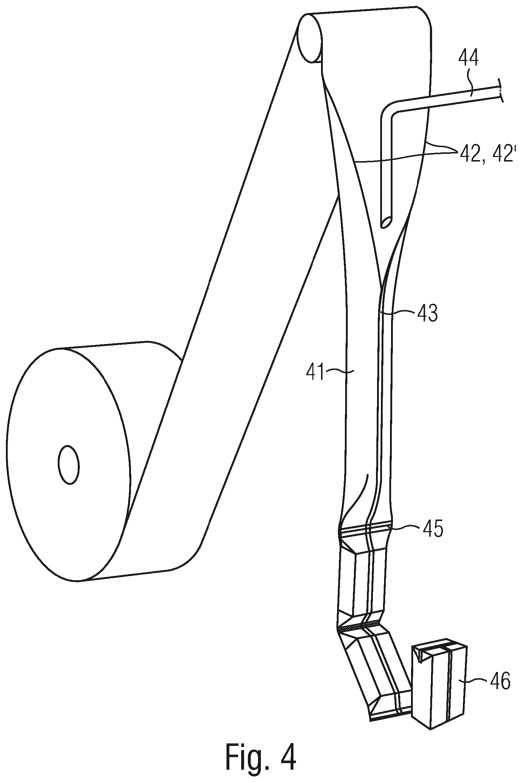

Fig. 4 shows the principle as described in the introduction of the present application, i.e. a web of packaging material is formed into a tube 41 by overlapping the longitudinal edges 42, 42' of the web and heat sealing them to one another, to thus form an overlap joint 43. The tube is continuously filled 44 with the liquid food product to be filled and is divided into individual, filled packages by repeated, double transversal seals 45 of the tube at a predetermined distance from one another below the level of the filled contents in the tube. The packages 46 are separated by cutting between the double transversal seals (top seal and bottom seal) and are finally shaped into the desired geometric configuration by fold formation along prepared crease lines in the material.

After use, the material in the packages may, in a simple manner and employing available techniques and equipment, readily be separated into its individual components, and in very pure form be recycled and re-used.

The laminated packaging material is recyclable. The fibre content of the packaging container (the paper or paperboard in the bulk layer of the laminated packaging material) may especially be recycled and be re-used in extremely pure form, using a repulper as described in the examples.

In the preferred embodiments, various advantages are achieved.

First, a small amount of polymer is used for the intermediate bonding layer which is desirable for sustainability, whilst still achieving good adhesion as shown by fibre tear on peeling.

As noted above, it had been assumed that bad adhesion and formation of air pockets had to be avoided. In attempts to reduce the amount of polymer applied in the melt extruded lamination layer, however, increased occurrence of air pockets was seen, while adhesion was actually maintained. It has been understood that satisfactory adhesion may still be maintained between the layers, despite such air pockets, and it has also been understood that such air pockets can be advantageous if maintained at a reasonable level. As there was delamination in the cellulose fibre layers, rather than at the layer interfaces upon peel testing, it was concluded that sufficient adhesion is obtained by the present invention.

The air pockets were found not to create problems in filled packages, but on the contrary, to provide improved packages with good barrier and heat seal integrity also of paper-barrier based laminates, in that blistering could be avoided. It was found that air pockets help to accommodate and even out the effect of steam (from the inherent moisture content of papers and cellulose-based materials) that emerges in the thin, fibrous paper substrate, upon heating thereof, such as in the heat sealing operations of the laminated material for the forming and sealing of packaging containers. This reduces the pressure and means that the intermediate bonding layer is not pushed away from the barrier layer.

Second, the use of a paper barrier substrate gives a high fibre content and reduces the non-fibre material content of the laminated packaging material, which again is desirable for sustainability.

Third, the paper barrier substrate provides a thermostable substrate for coating with the barrier material layer (e.g. during drying) and subsequent steps including lamination and heat sealing (especially hot air sealing and high frequency induction heat sealing).

Fourth, wet lamination and dispersion coating are avoided as the outermost layer and intermediate bonding layer are melt extruded. Wet lamination and dispersion coating are very different operations impossible to perform and integrate in the same manufacturing line as melt extrusion operations, because of different needs regarding web speeds and intermediate winding of the web materials onto reels and transfer of such reels between different lamination and coating stations. Consequently, introducing such operations would require rebuilding of manufacturing sites which are normally conventional extrusion lamination using melt extrusion of polymers for lamination and coating. This involves high investments costs for existing factories, which can be avoided with the preferred embodiments of the invention.

Fifth, faster repulping is achieved with the laminated packaging material than with conventional laminated packaging materials. This is surprising in view of the good adhesion. It is believed that due to the increased amount of air entrapments between the barrier and the intermediate bonding layer it is easier for the water to penetrate the structure and thereby start the delamination.

Sixth, fragmentation of the outermost layer is avoided during repulping of the full laminated packaging material. Small fragments are undesirable as they may remain in the fibre pulp. The faster repulping achievable with a laminated packaging material having a thinner intermediate bonding layer of polyethylene-based thermoplastic polymer applied via melt extrusion lamination in an amount of 5 to 10 g/m², increases the opportunity also for an outermost protective material layer applied by melt extrusion coating in a lower amount of 7 to 10 g/m², still avoiding to be fragmented in the repulping process.

As a final remark, the invention is not limited by the embodiments shown and described above but may be varied within the scope of the claims.

### List of reference numerals:

10 delaminable laminated packaging material
11 bulk layer
12 printed ink décor
13 intermediate bonding layer
14a barrier paper substrate
14b pre-coating barrier layer
14c vapour deposited barrier layer
16 outermost layer
18 tie layer
18, 19a and 19b inside polymer layers
19a interjacent layer
19b innermost layer
24 pre-laminated material
22b, 26b extrusion die
22a, 26a molten polymer curtain
23, 27 roller nip
24-25 laminated material (pre-laminate and inside polymer layers)
28 nip
28a molten polymer curtain
28b extrusion die
29 laminated packaging material
30a packaging container
30b pouch container
30c gable top package
31a longitudinal seal
31b longitudinal seal
32a transversal seal
32b transversal seal
33 opening device
41 tube
42, 42' edges of web
43 overlap joint
44 filling of tube
45 double transversal seal
46 packages

## Claims

1. A laminated packaging material (10) for packaging of liquid or semi-liquid food products, comprising as layers of a layer sequence:
- an outermost protective material layer (16);
- a bulk layer (11) of paper or paperboard or other cellulose-based material;
- an intermediate bonding layer (13) of polyethylene-based thermoplastic polymer applied via melt extrusion lamination in an amount of 5 to 10 g/m²;
- a gas barrier layer (14) bonded to the bulk layer (11) via the intermediate bonding layer (13), the gas barrier layer (14) comprising a barrier substrate (14a) of paper or paperboard or other cellulose-based material and at least one barrier material coating layer(14b, 14c), the paper barrier substrate (14a) being adjacent to the intermediate bonding layer (13); and
- one or more inside polymer layers (18, 19a, 19b), comprising an innermost liquid-tight, heat sealable material layer (19b).

2. A laminated packaging material (10) as claimed in Claim 1, wherein the intermediate bonding layer (13) is applied in an amount of 5 to 9 g/m², preferably 6 to 9 g/m², more preferably 7 to 9 g/m², most preferably 7 to 8 g/m².

3. A laminated packaging material (10) as claimed in Claim 1 or Claim 2, wherein the outermost layer (16) is applied in an amount of 7 to 10 g/m².

4. A laminated packaging material (10) as claimed in any one of Claims 1 to 3, wherein the intermediate bonding layer (13) of polyethylene-based thermoplastic polymer comprises LDPE, LLDPE or m-LLDPE; a co-polymer or graft co-polymers with functional-group containing monomer units selected from carboxylic, maleic anhydride and glycidyl functional group;, ionomer; or a blend of any two or more of these polymers.

5. A recyclable laminated packaging material (10) as claimed in any one of the preceding claims, wherein the barrier material coating layer (14c) comprises metal, metal oxide or silicon oxide.

6. A method of making a laminated packaging material (10) as claimed in any one of the preceding claims for packaging of liquid or semi-liquid food products, comprising the steps of:
- laminating the bulk layer (11) to the gas barrier layer (14) via the intermediate bonding layer (13) by means of melt extrusion, optionally with surface pre-treatment of the paper substrate layer (14a); and
- applying the outermost (16) and inside (18, 19) polymer layers.

7. A method as claimed in Claim 6, wherein the outermost layer (16) is applied by melt extrusion coating and/or the innermost layer (19b) is applied either by melt extrusion coating or as a pre-manufactured film.

8. A packaging container (30a; 30b; 30c) comprising the laminated packaging material (10) as defined in any one of Claims 1 to 5.

9. A method of making a packaging container (30a; 30b; 30c) as claimed in Claim 8.

10. A method of recycling a packaging container (30a; 30b; 30c) as claimed in Claim 8 or a laminated packaging material (10) as claimed in any one of Claims 1 to 5, comprising repulping of the laminated packaging material (10).
